# EUROPEAN PATENT APPLICATION

(11) **EP 4 130 646 A1**
(43) Date of publication of application: **08.02.2023**
(21) Application number: 21779965.9
(22) Date of filing: 15.02.2021
(51) Int. Cl.: G01B 11/00, G01C 3/00, G01C 3/06, G01S 7/497, G01S 17/89

(54) **INFORMATION PROCESSING DEVICE, COMPUTER PROGRAM, RECORDING MEDIUM, AND DISPLAY DATA CREATION METHOD**

(30) Priority: 31.03.2020 JP 2020063858
(71) Applicant: Pioneer Corporation, Tokyo 113-0021 (JP); Pioneer Smart Sensing Innovations Corporation, Tokyo 113-0021 (JP)
(72) Inventor: IWAI, Tomoaki, Kawagoe-shi, Saitama 350-8555 (JP)
(74) Representative: Grünecker Patent- und Rechtsanwälte PartG mbB
(86) International application number: PCT/JP2021/005464
(87) International publication number: WO 2021/199730

(57) **Abstract**

Provided is a technology for assisting adjustment of a mounting position and mounting orientation of a 3-D measurement device. An information processing device (10) is for assisting adjustment (calibration) of mounting positions and mounting orientations of lidars (1 and 2) mounted on a vehicle (3), and includes: a position and orientation acquisition unit (12) that acquires the mounting positions and mounting orientations of the lidars (1 and 2) with respect to the vehicle (3); a field-of-view information acquisition unit (11) that acquires field-of-view information of the lidars (1 and 2); a measurement information acquisition unit (13) that acquires measurement information (distance information from the lidars (1 and 2) to a reference target for each emission angle) from the lidars (1 and 2); and an image generation unit (15) that creates display data in which guides indicating the fields of view of the lidars (1 and 2) are superimposed on 3-D point cloud information of the reference target based on the acquired measurement information.

## Description

### Technical Field

The present invention relates to a technology for assisting adjustment of attachment of a three-dimensional measurement device.

### Background Art

Light detection and ranging (lidar) (laser imaging detection and ranging) is known as a time-of-flight (ToF) sensor that irradiates an object with pulsed light and measures a distance to the object based on a time until the light returns (for example, see Patent Literature 1).

In general, the lidar includes a scanning mechanism, and can acquire 3-D point cloud information by emitting pulsed light while changing an emission angle and detecting light returning from an object. Thus, the lidar can function as a 3-D measurement device.

### Citation List

### Patent Literature

Patent Literature 1: JP 2020-001562 A

### SUMMARY OF THE INVENTION

When lidar is mounted on a moving body such as a vehicle, it is necessary to perform adjustment to an appropriate position and orientation according to a field of view (sensing region) of the lidar. However, it is difficult to determine whether or not the position and the orientation are appropriate simply by displaying 3-D point cloud information acquired by the lidar on a screen. Therefore, a technology for assisting adjustment of a mounting position and mounting orientation of lidar is desired.

Therefore, an example of the problem to be solved by the present invention is to provide a technology for assisting adjustment of a mounting position and mounting orientation of a 3-D measurement device.

An information processing device according to the present invention includes: a position and orientation acquisition unit configured to acquire a mounting position and mounting orientation of a three-dimensional measurement device with respect to a moving body for mounting the three-dimensional measurement device thereto; a field-of-view information acquisition unit configured to acquire field-of-view information of the three-dimensional measurement device; a measurement information acquisition unit configured to acquire measurement information from the three-dimensional measurement device; and an image generation unit configured to create display data in which a guide indicating the field of view is superimposed on three-dimensional point cloud information based on the acquired measurement information, the mounting position, and the mounting orientation.

An information processing device according to the present invention includes: a position and orientation acquisition unit configured to acquire a mounting position and mounting orientation of each of a plurality of three-dimensional measurement devices with respect to a moving body for mounting the three-dimensional measurement devices thereto; a field-of-view information acquisition unit configured to acquire field-of-view information of each of the three-dimensional measurement devices; and an image generation unit configured to create data for displaying a guide indicating a field of view of each of the three-dimensional measurement devices with respect to the moving body.

A computer program according to the present invention causes a computer to function as: a position and orientation acquisition unit that acquires a mounting position and mounting orientation of a three-dimensional measurement device with respect to a moving body for mounting the three-dimensional measurement device thereto; a field-of-view information acquisition unit that acquires field-of-view information of the three-dimensional measurement device; a measurement information acquisition unit that acquires measurement information from the three-dimensional measurement device; and an image generation unit that creates display data in which a guide indicating the field of view is superimposed on three-dimensional point cloud information based on the acquired measurement information, the mounting position, and the mounting orientation.

A storage medium according to the present invention has the program stored therein.

A display data creation method according to the present invention is a display data creation method which is performed in an information processing device, the display data creation method including: a position and orientation acquisition step of acquiring a mounting position and mounting orientation of a three-dimensional measurement device with respect to a moving body for mounting the three-dimensional measurement device thereto; a field-of-view information acquisition step of acquiring field-of-view information of the three-dimensional measurement device; a measurement information acquisition step of acquiring measurement information from the three-dimensional measurement device; and an image generation step of creating display data in which a guide indicating the field of view is superimposed on three-dimensional point cloud information based on the acquired measurement information, the mounting position, and the mounting orientation.

### Brief Description of Drawings

Fig. 1 is a block diagram illustrating a configuration example of an information processing device according to an embodiment of the present invention.
Fig. 2 is a diagram illustrating a workplace where lidar is mounted on a vehicle and a mounting position and a mounting orientation are adjusted.
Fig. 3 is a diagram illustrating an example of a guide indicating a field of view of a single lidar.
Fig. 4 is a diagram illustrating an example of a guide indicating fields of view of two lidars.
Fig. 5 illustrates a display image in which a guide of a single lidar is superimposed on a 3-D point cloud based on measurement information acquired by the lidar.
Fig. 6 illustrates a display image in which a guide of each lidar is superimposed on a 3-D point cloud based on measurement information acquired by two lidars.
Fig. 7 illustrates a display image in which a guide of the first lidar is superimposed on a 3-D point cloud acquired by the lidar in the display image of Fig. 6.
Fig. 8 illustrates a display image in which a guide of the second lidar is superimposed on a 3-D point cloud acquired by the lidar in the display image of Fig. 6.

### DETAILED DESCRIPTION OF PREFERRED EMBODIMENTS

Hereinafter, an embodiment of the present invention will be described. An information processing device according to an embodiment of the present invention includes: a position and orientation acquisition unit configured to acquire a mounting position and mounting orientation of a 3-D measurement device with respect to a moving body for mounting the three-dimensional measurement device thereto; a field-of-view information acquisition unit configured to acquire field-of-view information of the 3-D measurement device; a measurement information acquisition unit configured to acquire measurement information from the 3-D measurement device; and an image generation unit configured to create display data in which a guide indicating the field of view is superimposed on 3-D point cloud information based on the acquired measurement information, the mounting position, and the mounting orientation. According to the present invention, since the position of a measurement target object with respect to the field of view (sensing region) of the 3-D measurement device is visualized, it is useful for adjusting the mounting position and mounting orientation of the 3-D measurement device.

An information processing device according to an embodiment of the present invention includes: a position and orientation acquisition unit configured to acquire a mounting position and mounting orientation of each of a plurality of 3-D measurement devices with respect to a moving body for mounting the three-dimensional measurement device thereto; a field-of-view information acquisition unit configured to acquire field-of-view information of each of the 3-D measurement devices; and an image generation unit configured to create data for displaying a guide indicating a field of view of each of the 3-D measurement devices with respect to the moving body. According to the present invention, fields of view (sensing regions) of a plurality of 3-D measurement devices are visualized, and the relative position of the plurality of 3-D measurement devices can be grasped. Therefore, it is useful for adjusting the mounting positions and mounting orientations of the 3-D measurement devices.

The guide may include lines representing four corners of the field of view. These lines make it easier to visually recognize the field of view of the 3-D measurement device.

The guide may include a surface which is equidistant from the mounting position in the field of view. This surface makes it easier to visually recognize the field of view of the 3-D measurement device.

The distance from the mounting position to the surface may correspond to a detection limit distance of the 3-D measurement device. This makes it easier to visually recognize the field of view of the 3-D measurement device.

A computer program according to an embodiment of the present invention causes a computer to function as: a position and orientation acquisition unit configured to acquire a mounting position and mounting orientation of a 3-D measurement device with respect to a moving body for mounting the three-dimensional measurement device thereto; a field-of-view information acquisition unit configured to acquire field-of-view information of the 3-D measurement device; a measurement information acquisition unit configured to acquire measurement information from the 3-D measurement device; and an image generation unit configured to create display data in which a guide indicating the field of view is superimposed on 3-D point cloud information based on the acquired measurement information, the mounting position, and the mounting orientation.

A storage medium according to an embodiment of the present invention has the computer program stored therein.

A display data creation method according to an embodiment of the present invention is a display data creation method in an information processing device, the display data creation method including: a position and orientation acquisition step of acquiring a mounting position and mounting orientation of a 3-D measurement device with respect to a mounting target moving body; a field-of-view information acquisition step of acquiring field-of-view information of the 3-D measurement device; a measurement information acquisition step of acquiring measurement information from the 3-D measurement device; and an image generation step of creating display data in which a guide indicating the field of view is superimposed on 3-D point cloud information based on the acquired measurement information, the mounting position, and the mounting orientation.

### Embodiment

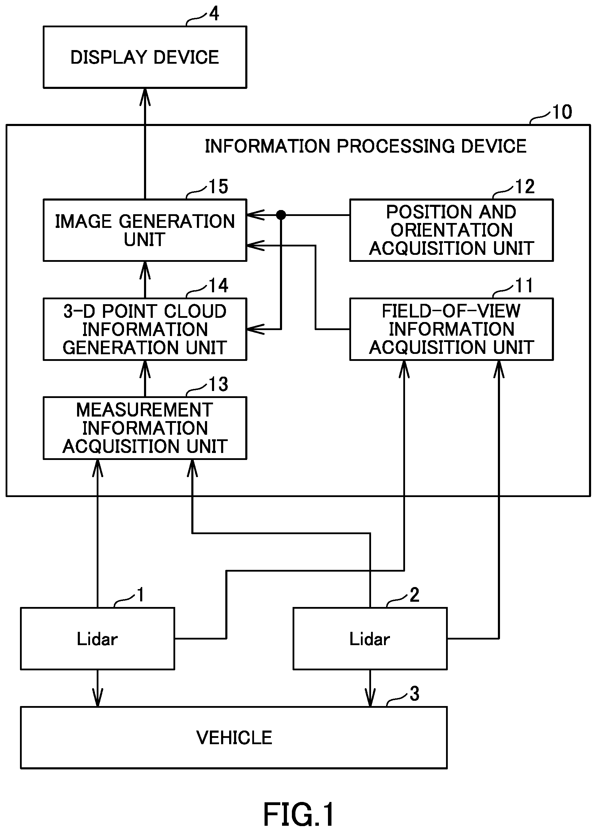

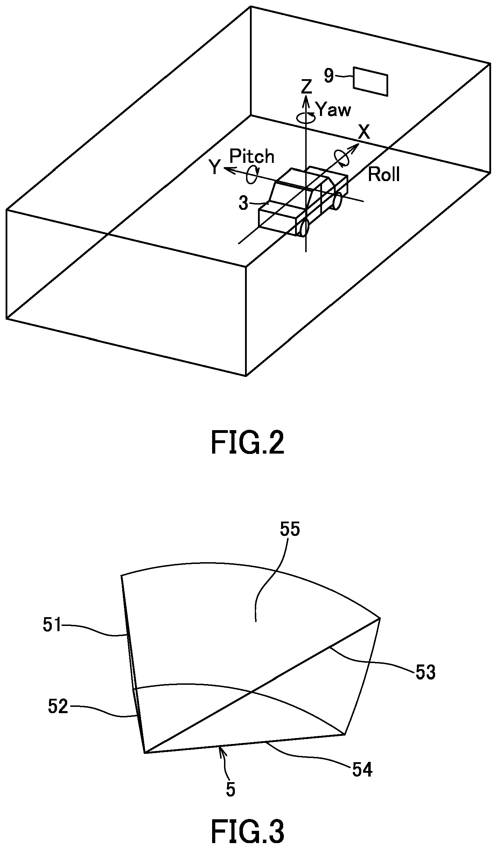

Fig. 1 is a block diagram illustrating a configuration example of an information processing device 10 according to an embodiment of the present invention. Fig. 2 is a diagram illustrating a workplace where lidars (3-D measurement devices) 1 and 2 are mounted on a vehicle (moving body) 3 and a mounting position and a mounting orientation are adjusted.

The information processing device 10 is for assisting adjustment (calibration) of mounting positions and mounting orientations of the lidars 1 and 2 mounted on the vehicle 3. This adjustment takes place in the workspace as illustrated in Fig. 2. In this workplace, for example, a floor, a ceiling, and a wall have a color with low reflectance, for example, black, and a target 9 is attached to the wall in front of the vehicle 3. The target 9 is formed in a horizontally long rectangular plate shape with a material having high reflectance.

In the present specification, an angle around an X axis which is a front-rear direction of the vehicle 3 illustrated in Fig. 2 is referred to as a roll angle, an angle around a Y axis which is a left-right direction of the vehicle 3 is referred to as a pitch angle, and an angle around a Z axis which is a top-bottom direction of the vehicle 3 is referred to as a yaw angle.

The lidars 1 and 2 continuously emit pulsed light while changing an emission angle, and measure a distance to an object by detecting light returning from the object. These lidars 1 and 2 are attached to a roof or the like of the vehicle 3. In the present invention, the number of lidars mounted on the vehicle 3 may be one or more.

The information processing device 10 displays 3-D point cloud information of the target 9 acquired by the lidars 1 and 2 and guides indicating fields of view of the lidars 1 and 2 on a display device 4, thereby assisting adjustment of the mounting positions and mounting orientations of the lidars 1 and 2.

As illustrated in Fig. 1, the information processing device 10 includes a field-of-view information acquisition unit 11, a position and orientation acquisition unit 12, a measurement information acquisition unit 13, a 3-D point cloud information generation unit 14, and an image generation unit 15. Each of these blocks is constructed by an arithmetic device or the like included in the information processing device executing a predetermined computer program. Such a computer program can be distributed via, for example, a storage medium or a communication network.

The field-of-view information acquisition unit 11 acquires field-of-view information of each of the lidars 1 and 2. The field-of-view information is information of a sensing region, and specifically, upper and lower detection angle ranges, left and right detection angle ranges, and a detection limit distance. Each of the lidars 1 and 2 has the field-of-view information, and the field-of-view information can be acquired by connecting each of the lidars 1 and 2 and the information processing device 10.

The position and orientation acquisition unit 12 acquires the mounting position (an x coordinate, a y coordinate, and a z coordinate) and the mounting orientation (the roll angle, the pitch angle, and the yaw angle) of each of the lidars 1 and 2 with respect to the vehicle 3. As an example of the acquisition method, for example, the mounting position of each of the lidars 1 and 2 is detected by another lidar, or a gyro sensor is mounted on each of the lidars 1 and 2 to detect the mounting orientation. The coordinates and angles obtained in this manner are automatically or manually input to the position and orientation acquisition unit 12.

The measurement information acquisition unit 13 acquires measurement information measured by each of the lidars 1 and 2, that is, distance information to the target 9 for each emission angle in this example.

The 3-D point cloud information generation unit 14 generates 3-D point cloud information of the target 9 based on the measurement information acquired by the measurement information acquisition unit 13 and the mounting position and mounting orientation acquired by the position and orientation acquisition unit 12.

The image generation unit 15 creates display data in which the guides indicating the ranges of the fields of view of the respective lidars 1 and 2 are superimposed on a 3-D point cloud of the target 9, and data for displaying only the guides of the respective lidars 1 and 2, and outputs the created data to the display device 4.

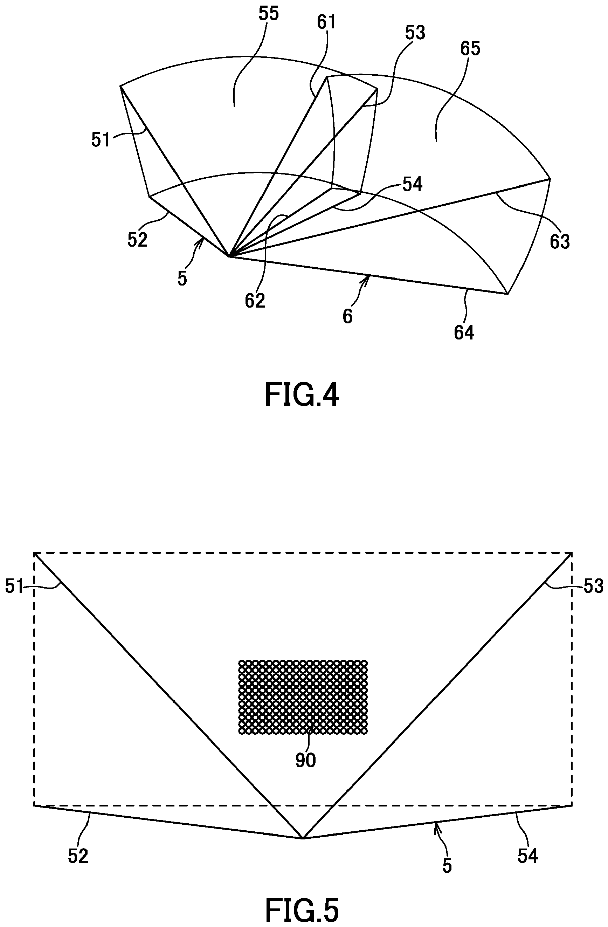

Next, an image displayed on the display device 4 by the information processing device 10 will be described. Fig. 3 is a diagram illustrating an example of the guide indicating the field of view of the single lidar 1. Fig. 4 is a diagram illustrating an example of the guides indicating the fields of view of the two lidars 1 and 2.

A guide 5 illustrated in Figs. 3 and 4 includes straight lines 51, 52, 53, and 54 representing four corners of the field of view of the lidar 1 and a surface 55 which is equidistant from the lidar mounting position in the field of view. The distance from the lidar mounting position to the surface 55 corresponds to the detection limit distance of the lidar 1. That is, a region constituted by the straight lines 51, 52, 53, and 54 and the surface 55 is the field of view of the lidar 1. Note that the surface 55 does not have to be displayed.

Similarly to the guide 5, a guide 6 illustrated in Fig. 4 includes straight lines 61, 62, 63, and 64 representing four corners of the field of view of the lidar 2 and a surface 65 which is equidistant from the lidar mounting position in the field of view. The distance from the lidar mounting position to the surface 65 corresponds to the detection limit distance of the lidar 2. That is, a region constituted by the straight lines 61, 62, 63, and 64 and the surface 65 is the field of view of the lidar 2.

The guides 5 and 6 in Figs. 3 and 4 are displayed on the display device 4 in a state in which the mounting position and mounting orientation of each of the lidars 1 and 2 acquired by the position and orientation acquisition unit 12 are given to the field-of-view information that each of the lidars 1 and 2 has. That is, in the information processing device 10, the position and orientation acquisition unit 12 acquires the mounting position and mounting orientation of each of the lidars 1 and 2 with respect to the vehicle 3, the field-of-view information acquisition unit 11 acquires the field-of-view information of each of the lidars 1 and 2, and the image generation unit 15 creates data for displaying the guides 5 and 6 indicating the field of view of each of the lidars 1 and 2 with respect to the vehicle 3 and outputs the data to the display device 4.

As can be seen from Fig. 4, the two lidars 1 and 2 are arranged with shifted yaw angles, and in the example of Fig. 4, the two lidars 1 and 2 are arranged in such a way that the fields of view partially overlap each other. As described above, since the information processing device 10 visualizes the fields of view of the plurality of lidars 1 and 2 and displays the fields of view on the display device 4, an operator can grasp a relative position and an overlapping state of the fields of view by viewing the image displayed on the display device 4, and can easily adjust the mounting positions and mounting orientations of the lidars 1 and 2. For example, by viewing the display image of Fig. 4, the orientations of the lidars 1 and 2 can be adjusted in such a way that the straight line 61 and the straight line 53 overlap each other.

Fig. 5 illustrates a display image in which the guide 5 of the single lidar 1 is superimposed on a 3-D point cloud 90 based on the measurement information acquired by the lidar 1. In order to display this display image on the display device 4, in the information processing device 10, the position and orientation acquisition unit 12 acquires the mounting position and mounting orientation of the lidar 1 with respect to the vehicle 3 (position and orientation acquisition step), the field-of-view information acquisition unit 11 acquires the field-of-view information of the lidar 1 (field-of-view information acquisition step), the measurement information acquisition unit 13 acquires the measurement information (the distance information to the target 9 for each emission angle) from the lidar 1 (measurement information acquisition step), the 3-D point cloud information generation unit 14 generates the 3-D point cloud information of the target 9 based on the measurement information and the mounting position and mounting orientation acquired by the position and orientation acquisition unit 12, and the image generation unit 15 creates display data in which the guide 5 of the lidar 1 is superimposed on the 3-D point cloud 90 and outputs the display data to the display device 4 (image generation step).

As can be seen from Fig. 5, the 3-D point cloud 90 representing the target 9 is located at the center of the guide 5 indicating the field of view of the lidar 1. As described above, since the information processing device 10 causes the display device 4 to display the guide 5 of the lidar 1 superimposed on the 3-D point cloud 90 representing the target 9, the operator can grasp the position of the target 9 with respect to the field of view of the lidar 1 by viewing the image displayed on the display device 4, and can easily adjust the mounting position and mounting orientation of the lidar 1. In Figs. 5 to 7, the surface 55 is not displayed.

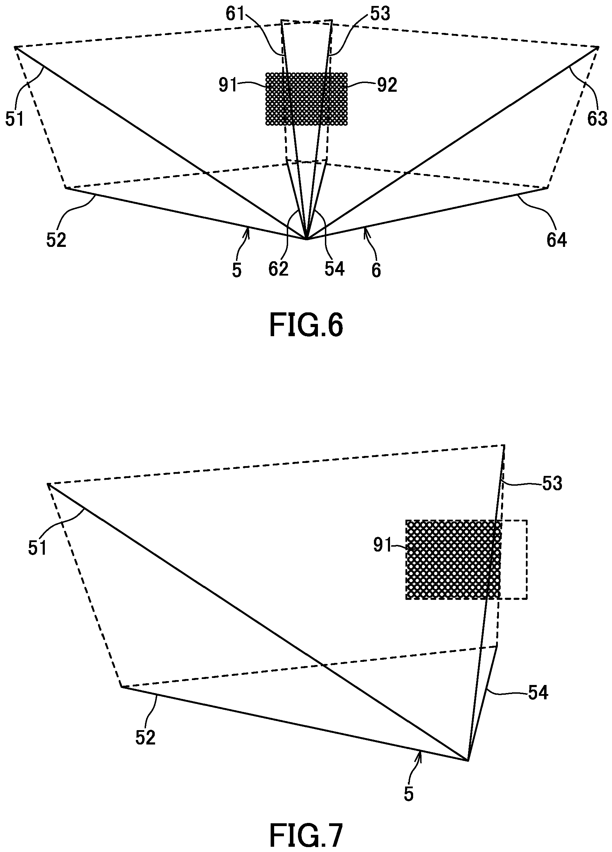

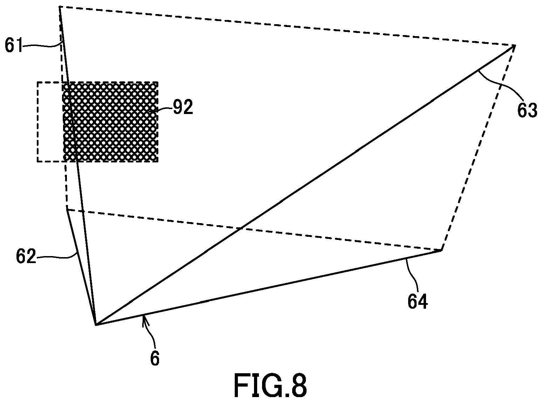

Fig. 6 illustrates a display image in which the guides 5 and 6 of the respective lidars 1 and 2 are superimposed on 3-D point clouds 91 and 92 based on the measurement information acquired by the two lidars 1 and 2, the mounting positions, and the mounting orientations. Fig. 7 illustrates a display image in which the guide 5 of the first lidar 1 is superimposed on the 3-D point cloud 91 acquired by the lidar 1 in the display image of Fig. 6. Fig. 8 illustrates a display image in which the guide 6 of the second lidar 2 is superimposed on the 3-D point cloud 92 acquired by the lidar 2 in the display image of Fig. 6.

In order to display the display images of Figs. 6 to 8 on the display device 4, in the information processing device 10, the position and orientation acquisition unit 12 acquires the mounting position and mounting orientation of each of the lidars 1 and 2 with respect to the vehicle 3 (position and orientation acquisition step), the field-of-view information acquisition unit 11 acquires the field-of-view information of each of the lidars 1 and 2 (field-of-view information acquisition step), the measurement information acquisition unit 13 acquires the measurement information (the distance information to the target 9 for each emission angle) from each of the lidars 1 and 2 (measurement information acquisition step), the 3-D point cloud information generation unit 14 generates the 3-D point cloud information of the target 9 based on the measurement information and the mounting position and mounting orientation acquired by the position and orientation acquisition unit 12, and the image generation unit 15 creates display data in which the guide 5 of the lidar 1 is superimposed on the 3-D point cloud 91, display data in which the guide 6 of the lidar 2 is superimposed on the 3-D point cloud 92, and display data in which both the guides 5 and 6 are superimposed on the 3-D point clouds 91 and 92 (image generation step) and output the created display data to the display device 4.

As can be seen from Figs. 6 to 8, the two lidars 1 and 2 are arranged with shifted yaw angles, and the two lidars 1 and 2 are arranged in such a way that the fields of view partially overlap each other. The right end of the target 9 is outside the field of view of the lidar1 and the left end of the target 9 is outside the field of view of the lidar2.

As described above, the information processing device 10 causes the display device 4 to display the two guides 5 and 6 of the lidars 1 and 2 superimposed on the 3-D point clouds 91 and 92 representing the target 9, so that the operator can grasp the position of the target 9 with respect to the field of view of the lidar 1, the position of the target 9 with respect to the field of view of the lidar 2, and the relative position and overlapping state of these fields of view by viewing the image displayed on the display device 4, and can easily adjust the mounting positions and mounting orientations of the lidar 1 and 2. For example, in a case where the 3-D point cloud 91 and the 3-D point cloud 92 are displaced in a vertical direction in the display image of Fig. 6, the pitch angles of the lidars 1 and 2 are adjusted while viewing the image displayed on the display device 4, and the 3-D point cloud 91 and the 3-D point cloud 92 are adjusted so as to be smoothly connected.

Although the embodiments of the present invention have been described above in detail with reference to the drawings, the specific configuration is not limited to these embodiments, and modifications and the like in design within the gist of the present invention are also included in the present invention. The contents of embodiments illustrated in the above-described drawings can be combined with each other as long as there is no particular contradiction or problem in the purpose, configuration, and the like of the embodiments. Further, the contents of the drawings can be independent embodiments, and the embodiments of the present invention are not limited to one embodiment in which the drawings are combined.

### Reference Signs List

- 1, 2: Lidar (3-D measurement device)
- 3: Vehicle (moving body)
- 4: Display device
- 5, 6: Guide
- 10: Information processing device
- 11: Field-of-view information acquisition unit
- 12: Position and orientation acquisition unit
- 13: Measurement information acquisition unit
- 14: 3-D point cloud information generation unit
- 15: Image generation unit

## Claims

1. An information processing device comprising:
a position and orientation acquisition unit configured to acquire a mounting position and mounting orientation of a three-dimensional measurement device with respect to a moving body for mounting the three-dimensional measurement device thereto;
a field-of-view information acquisition unit configured to acquire field-of-view information of the three-dimensional measurement device;
a measurement information acquisition unit configured to acquire measurement information from the three-dimensional measurement device; and
an image generation unit configured to create display data in which a guide indicating the field of view is superimposed on three-dimensional point cloud information based on the acquired measurement information, the mounting position, and the mounting orientation.

2. An information processing device comprising:
a position and orientation acquisition unit configured to acquire a mounting position and mounting orientation of each of a plurality of three-dimensional measurement devices with respect to a moving body for mounting the three-dimensional measurement devices thereto;
a field-of-view information acquisition unit configured to acquire field-of-view information of each of the three-dimensional measurement devices; and
an image generation unit configured to create data for displaying a guide indicating a field of view of each of the three-dimensional measurement devices with respect to the moving body.

3. The information processing device according to claim 1 or 2, wherein
the guide includes lines representing four corners of the field of view.

4. The information processing device according to claim 1 or 2, wherein
the guide includes a surface which is equidistant from the mounting position in the field of view.

5. The information processing device according to claim 4, wherein
the distance corresponds to a detection limit distance of the three-dimensional measurement device.

6. A computer program configured to cause a computer to function as:
a position and orientation acquisition unit that acquires a mounting position and mounting orientation of a three-dimensional measurement device with respect to a moving body for mounting the three-dimensional measurement device thereto;
a field-of-view information acquisition unit that acquires field-of-view information of the three-dimensional measurement device;
a measurement information acquisition unit that acquires measurement information from the three-dimensional measurement device; and
an image generation unit that creates display data in which a guide indicating the field of view is superimposed on three-dimensional point cloud information based on the acquired measurement information, the mounting position, and the mounting orientation.

7. A storage medium in which the program according to claim 6 is stored.

8. A display data creation method which is performed in an information processing device, the display data creation method comprising:
a position and orientation acquisition step of acquiring a mounting position and mounting orientation of a three-dimensional measurement device with respect to a moving body for mounting the three-dimensional measurement device thereto;
a field-of-view information acquisition step of acquiring field-of-view information of the three-dimensional measurement device;
a measurement information acquisition step of acquiring measurement information from the three-dimensional measurement device; and
an image generation step of creating display data in which a guide indicating the field of view is superimposed on three-dimensional point cloud information based on the acquired measurement information, the mounting position, and the mounting orientation.
